# EUROPEAN PATENT APPLICATION

(11) **EP 2 739 061 A1**
(43) Date of publication of application: **04.06.2014**
(21) Application number: 12306493.3
(22) Date of filing: 30.11.2012
(51) Int. Cl.: H04N 21/2343, H04N 21/258, H04N 21/24, H04N 21/845, G11B 27/02, H04N 21/8549

(54) **Multi resolutions adaptive video summarization and its adaptive delivery**

(71) Applicant: Alcatel Lucent, 75007 Paris (FR)
(72) Inventor: Sayadi, Bessem, 91620 Nozay (FR); Nouri, Marwen, 91620 Nozay (FR)
(74) Representative: MERH-IP Matias Erny Reichl Hoffmann

(57) **Abstract**

A method for video content summarization and delivery, said video content being shared online among a group (10) of users, said method comprising the following steps
- recording the browsing logs, of users from the group (10), on the video content per chunk of the video content ;
- computing and updating the frequency of views of each chunk;
- retrieving information relating to the connection context of a user from the group online accessing the video through an user equipment (2);
- retrieving information relating to the display of the user equipment;
- determining a threshold value of the frequency of views so that a summarization of the video content composed of the chunks that have a frequency view higher than the threshold value agrees with the retrieved information;
- delivering the summarization of the video content to the user equipment.

## Description

### FIELD OF THE INVENTION

The present invention relates to multimedia content summarization and delivery over communication networks.

### BACKGROUND OF THE INVENTION

With the exponential growth of published video contents on communications networks, video summarization has become the key technology to facilitate handling the huge amount of video contents and to help people browse and search this big video data.

In fact, video summarization offers an efficient video management thanks to generating a concise summary of the semantics of the video content highlighting the most interesting or important video part (by capturing the most important event such as goals in the final of European champions league, or containing the essence of the original video content such as summary of a movie). Such produced video summaries are usually static (i.e. a sequence of key frames, sub shots or sub sequences).

In order to determine the semantic of a video content, video summarization exploits visual and/or oral indicators of the video, such as texture, color histogram, variation between frames, shape, edges, changes in the audio level, speech analysis. These indicators may be further correlated with some visual events like emotional changes or scenes with high contrasts, as the main issue is to extract knowledge and high-level information contained in the video to be summarized.

Moreover, metadata that may accompany the video content can be also exploited since it may provide precise information about the video if it was correctly tagged by the users or the editor.

More recent video summarization techniques, additionally or alternatively, utilize the previous viewer browsing logs to determine the most important sequences in a video content. In other words, during the browsing process, viewers leave their footprints of their video content understanding which may be used for video summarization.

However, these footprints may be biased by different feature relating to video browsing and do not correctly reflect the interestingness of users. Video browsing experience may be different from one user equipment to another and from one network connection to another.

Another problem arises with regards to the user equipment capabilities used for watching the shared content, as they undoubtedly influence the watcher behavior and his/her understanding of the video, or more generally the video browsing experience. A further problem is in relation with the network connections used for the visualization of the shared video content.

Yet, another problem is that existent video summarization techniques are deployed without any relevance to the inter-relation between viewers.

Further problems arise with respect to the delivery of summarized videos. Indeed, more and more constraints on the available bandwidth due to the scarcity of the wireless bandwidth and also to the huge increase in the video traffic are imposed while a large diversity in user equipments for online video browsing is involved.

One object of the present invention is to improve video summarization.

Another object of the present invention is to improve the navigation in video contents shared on social networks.

Another object of the present invention is to adapt the delivery of summarized video contents.

Another object of the present invention is to propose a method for automatic construction and delivery of video summaries.

Another object of the present invention is to propose an adaptive streaming, while preserving the quality of the delivered video content.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to methods for video content summarization and delivery over a communication network, said video content being shared online among a group of users, said method comprising the following steps
- slicing the video content into chunks;
- recording the browsing logs, of at least a user from the group of users, on the video content per chunk;
- computing and updating the frequency of views of each chunk of the video content;
- retrieving information relating to the connection context of a user from the group of users online accessing the video content through an user equipment;
- retrieving information relating to the display of the user equipment used for the online access of the video content;
- determining a threshold value of the frequency of views so that a summarization of the video content composed of the chunks that have a frequency view higher than the threshold value agrees with the retrieved information relating to the connection context and to the display of the user equipment;
- delivering the summarization of the video content to the user equipment.

In accordance with another broad aspect, the information relating to the display of the user equipment include the screen size of the user equipment.

In accordance with another broad aspect, the information relating to the connection context include information relating to the user mobility and to the access network.

Various embodiments further relate to systems for video content summarization and delivery over a communication network, said video content being shared online among a group of users, said system comprising
- means for slicing the video content into chunks;
- means for recording the browsing logs, of at least a user from the group of users, on the video content per chunk;
- means for computing and updating the frequency of views of each chunk of the video content;
- means for retrieving information relating to the connection context of a user from the group of users online accessing the video content through an user equipment;
- means for retrieving information relating to the display of the user equipment used for the online access of the video content;
- means for determining a threshold value of the frequency of views so that a summarization of the video content composed of the chunks that have a frequency view higher than the threshold value agrees with the retrieved information relating to the connection context and to the display of the user equipment;
- means for delivering the summarization of the video content to the user equipment.

Various embodiments further relate to a computer program product for performing the above methods.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### BRIEF DESCRIPTION OF THE DRAWINGS

The objects, advantages and other features of the present invention will become more apparent from the following disclosure and claims. The following non-restrictive description of preferred embodiments is given for the purpose of exemplification only with reference to the accompanying drawings in which:
- FIG.1 is a block diagram illustrating an embodiment for a video content summarization and delivery;
- FIG.2 is a schematic diagram illustrating interestingness statistics of a video content to be summarized.

### DETAILED DESCRIPTION OF ILLUSTRATIVE EMBODIMENTS

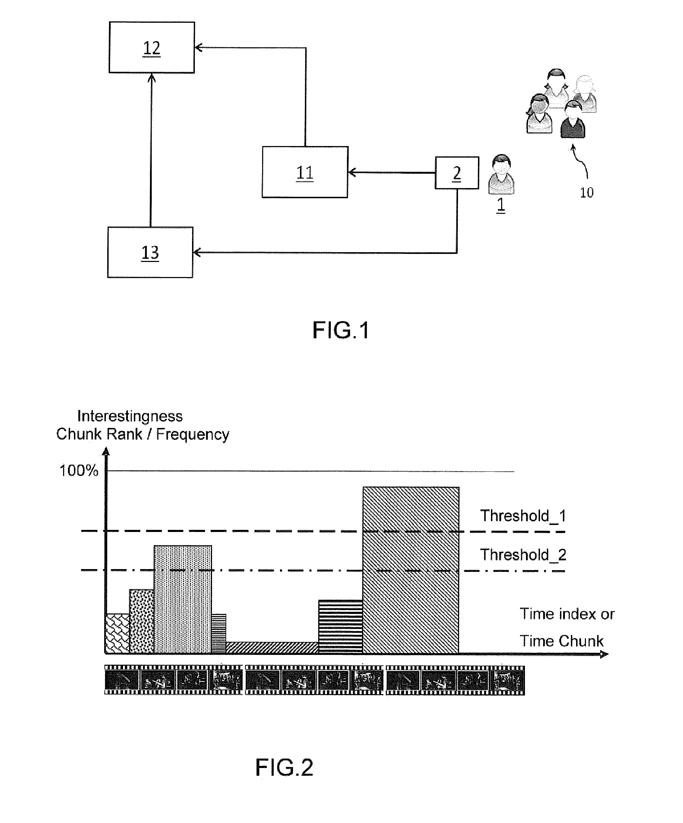

With reference to figure 1, there is shown a user **1** provided with a user equipment **2** enabling an online browsing of a video content available on a delivery node **12.**

As used herein, the expression "user equipment" is intended to be understood in a broad sense to include any user terminal permitting to wirelessly or physically connect to a communication network and to browse online video content available on a delivery node **12** of this communication network. A laptop computer, a desktop computer, a smartphone, a mobile telephone, or a Personal Digital Assistant (PDA) are examples of such user equipment **2.**

The delivery node **12** is any network entity (server, cache, replication server, video broadcast server, network storage unit for example) comprising a video content made available on request from the user equipment **1**. In particular, the delivery node **12** may be any network node within a social network platform **13** permitting video content sharing.

The user **1** belongs to a group **10** of users. From his respective user equipment **1**, each user of the group may browse online a video content shared among the group **10** (i.e. to which all users of the group **10** have access) on the social network platform **13.**

The members of the group **10** of users share at least one similar interest (hoppy, sport, music for example) or a predefined criterion (access network, service provider, age, mother tongue, chat room for example) such those of social networks **13** (Facebook®, Google+®, or YouTube® for example). Depending on the social network popular terms, the group **10** of users may be also termed as "Friends", "Contacts", "Fans", or "Buddy" (i.e. a social network group).

During his/her online interaction with a video content available on the delivery node **12** of the social network platform **13,** the user **1** may, for example, see the first chunks (shots, segments, parts, or frames) of the video to discover the content. Then, eventually, he/she move backward/forward within the video, for example, to view a desired chunk or scene.

As a result, some chunks of this video content may be viewed one or many times, whereas some others chunks are skipped or not reached. Advantageously, these interactions reflect the interestingness of the viewed chunks according to the perception of user **1**. In practice, the user **1** leaves during his/her online browsing of the video content his/her footprints of his/her video content understanding (likely, most viewed scenes summarize the video content from the viewer viewpoint).

In order to obtain this interestingness statistics per chunk of the video content which is being browsed by user **1**, an interest builder **11** is configured
- to slice the requested video content into chunks. The chunk sizes are such that the reference Intra-coded Frame at the beginning of each chunk is synchronized, typically of one to ten seconds of video time; and
- to compute (count) the view of each chunk per user **1.**

Considering now the individual behavior of each one of the group **10** of users, every chunk will have different view counter. This counter is a frequency that teaches which chunks are more interesting and more significant for the understanding of the original video clip to the mind of the group **10** of users.

Then, the delivery node **12** is configured to build a video summarization based on the interestingness statistics for each video chunk computed by the interest builder **11** for each user **1** of the group **10** of users that have viewed the video content.

The algorithm for building the interestingness per chunk per video content is as follows:

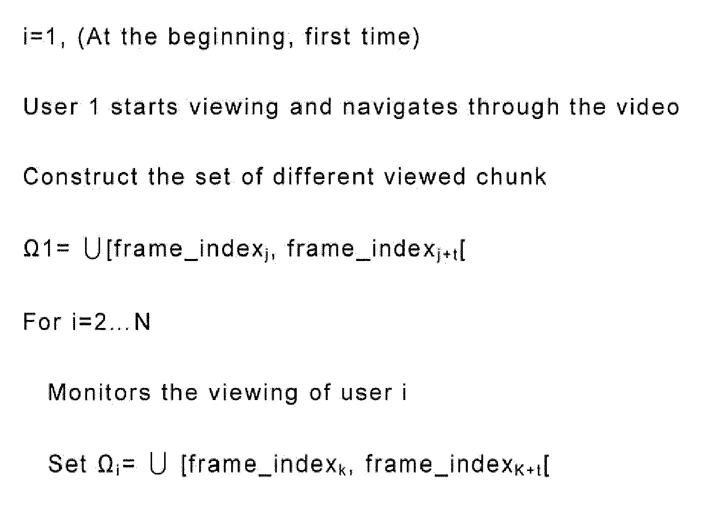

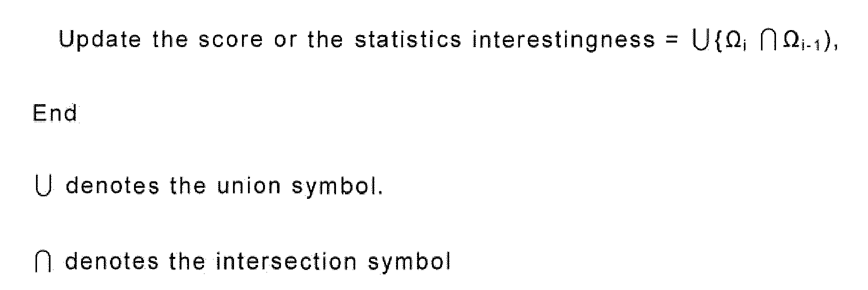

When user **1** navigates in the video content, he/she updates the statistics of interestingness (i.e. updates the consumption frequency or the hit-ratio of each chunk of the content). As an illustrative example, Figure **2** depicts the histogram (a bar plot) of interestingness of each chunk versus time index, these information being provided by the interest builder **11** to the delivery node **12**.

One can mention that some chunks of the video content bring a lot of interests since they are consumed or viewed many times. Thus, in one embodiment, only the video chunks having a frequency higher than a predefined threshold (for example, threshold_1 or threshold_2 as indicated in figure 2) are extracted and assembled to form a summarization version of the original video content. For example, if the "threshold_1" is used, the video summarization only contains the most important part of the video content. If the "threshold_2" is used, the video summarization contains the most two important parts of the video content.

Accordingly, a plurality of summarization versions may be built for each video content, each summarization being characterized by a different interestingness histogram (or statistics) denoted by S_version_ⱼ where the sub_index j denotes the encoded version.

A probability time line which is dynamically based on users mutual interests, and the number of viewing of each video chunk from certain video content is then built. Advantageously, this probability time line can be seen as a means for video chunks ranking, It shall be noted that, for a group **10** of users of a social network **13,** the probability is expected to be very high (for example higher than 0.5) to find a chunk of the video content having a common interest to most viewers. Friends (or contacts) generally share the most funny or important parts of the video from their point of view.

Furthermore, it shall be noted that the browsing of the video content by the user **1** depends upon the screen size of his/her user terminal **2.** In practice, if a user has a compact screen size (2 inches for example, such as in a smartphone or a mobile phone), he/she generally spends less time than a user who has a screen of larger size (for example, 5 inches or more, such as in a laptop computer or a personal digital assistant). This is typically related to the quality of experience.

Accordingly, the interest builder **11** is further configured to retrieve information relating to the display of the user equipment, such as its screen size and/or the screen resolution (for example 1024x768 pixels, 1024x1024 pixels, 640 x 480 pixels, 852 x 480 pixels, 2048 × 1535 pixels), and to provide them to the delivery node **12.** In all likelihood, the user **1** of the group **10** of users may not watch the same amount of video if the video content is in HD (High Definition) or in CIF (Common Intermediate Format). In the second case, the user may skip some parts due to a difficulty of watching or a lack of watching comfort.

The browsing of the video content may further depend upon the available bandwidth between the delivery node **12** and the user equipment **2,** or more generally, upon the connection context of the user **1** such as the user mobility (stationary, slow/fast walking, running or driving), the access network (wireless/wired network, communication standards),

Connection context information may be retrieved from the access network from which the user **1** is connected or from applications available on the user equipment **2** (such mobility modeling in cellular communications networks, or GPS application),

Thus, the interest builder **11** is further configured to retrieve information relating to the connection context of the user **1** (for example, capacity of the communication channel linking the user equipment **1** to the delivery node **12,** mobility of the user **1** and any other factor that may affect in one way or another online video consuming).

When a summarized video content is requested by a user **1** via a user terminal **11**, the delivery network node **12** examines
- the summarization of the content with respect to the past viewings (the importance of the different chunks of the requested video content or the interestingness of chunks as plotted in figure 2);
- the connections context of the user **1**, notably the channel bandwidth of the communication link; and
- the display capabilities of the user equipment **11** (namely, screen size/resolution).

Subsequently, the delivery node adjusts, in function of the connections context and the display capabilities of the user equipment, the threshold used for extracting the chunks, the viewing (by the members of the group **10** of users) frequency of which is higher than this threshold. In other words, the threshold may be varied in order to adapt the content bitrate to the available bandwidth and/or to the user equipment capabilities, so that the summarized video agrees with the connection context and the display capabilities of the user equipment. For example,
- if the user equipment **11** is a 3G mobile phone (i.e. small screen size and scarce channel capacity), the threshold may be set at the value of threshold_1 (see figure 2). As a result, the delivered summarized video is the most viewed chunk by the members of the group **10** of users;
- if the user equipment is a 4G personal digital assistant (i.e. intermediate screen size and adequate channel capacity), the threshold may be set at the value threshold_2 (see figure 2). As a result, the delivered summarized video is composed of the two most viewed video chunks by the members of the group **10** of users (i.e. the delivery node **12** delivers more bitrate than in the previous case);
- if the user equipment is a desktop computer (i.e. wired connection and a large screen size), the threshold may be set at a value lower than that of threshold_2 (see figure 2) or even close to 0%. As a result, the delivered summarized video is almost equal to the original video content.

In one embodiment, when the channel capacity varies, the delivery node **12** switches between the video summarization versions by re-determining (i.e. adjusting) the threshold on the interestingness statistics of the video chunks for video summarizing. As a result, the summarization is dynamically obtained by learning the previous viewers browsing in agreement with (in correlation with) the display capabilities of the user equipment (such as the screen size) and the connection context (such as the available bandwidth). Accordingly, the importance of video chunks is correlated to the user equipment capabilities, network connections and the group of users understanding the video.

In one embodiment, depending upon the available bandwidth for the user equipment **11** (i.e. the available bit rate in kbps) and/or its screen size, the delivery node **12** decides to deliver a more or less bitrate thereto. If the available channel bitrates is very tight and/or the screen size of the user equipment is relatively small (about or less than 2 inches), only the most important parts/chunks of the video are sent to the user (expecting that users do not spend much time on viewing a video content when they are connected through a mobile communication network). Otherwise, the user can always browse another version of the delivered video content as well as request others part of this video content, or even the whole content.

Advantageously, it results from taking the screen size of the user equipment into account, a multi-resolution adaptive method for social video summarization and summarized video delivery (or streaming).

It shall be noted that the above described method may be similarly applied for audio summarization and delivery (audio chunk instead of video chunk).

Advantageously, the disclosed video summarization and delivery method and system are
- modular in that the video summarization and delivery is achieved dynamically according to each group of viewers sharing a same interest (i.e. depending on the understanding of the video semantic content per group of users);
- efficient for delivery and/or catching nodes, particularly within social network platform for multimedia content sharing. It permits, in practice, to alleviate the investment of network operator and service providers in the storage capacity;

It shall be noted that the disclosed method and system for video summarization and delivery may be eventually used in conjunction with any other video summarization method for enhancing the semantic understanding of video content.

## Claims

1. A method for video content summarization and delivery over a communication network **(13),** said video content being shared online among a group **(10)** of users, said method comprising the following steps
- slicing the video content into chunks;
- recording the browsing logs, of at least a user (**1**) from the group (**10**) of users, on the video content per chunk;
- computing and updating the frequency of views of each chunk of the video content;
- retrieving information relating to the connection context of a user (**1**) from the group **(10)** of users online accessing the video content through an user equipment **(2);**
- retrieving information relating to the display of the user equipment **(2)** used for the online access of the video content;
- determining a threshold value of the frequency of views so that a summarization of the video content composed of the chunks that have a frequency view higher than the threshold value agrees with the retrieved information relating to the connection context and to the display of the user equipment **(2);**
- delivering the summarization of the video content to the user equipment **(2).**

2. The method of claim 1, wherein the information relating to the display of the user equipment **(2)** include the screen size of the user equipment **(2).**

3. The method of claims 1 or 2, wherein the information relating to the connection context include information relating to the user mobility.

4. The method of the preceding claim, wherein the information relating to the connection context further include information relating to the access network.

5. The method of claims 3 or 4, wherein the information relating to the connection context further include the capacity of the communication channel linking the user equipment **(2)** to the communication network.

6. The method of any of the preceding claims, wherein it further comprises an re-determining step of the determined threshold value, if the retrieved information relating to the connection context or to the display of the user equipment change.

7. A system for video content summarization and delivery over a communication network (**13**), said video content being shared online among a group **(10)** of users, said system comprising
- means for slicing the video content into chunks;
- means for recording the browsing logs, of at least a user (**1**) from the group **(10)** of users, on the video content per chunk;
- means for computing and updating the frequency of views of each chunk of the video content;
- means for retrieving information relating to the connection context of a user (**1**) from the group **(10)** of users online accessing the video content through an user equipment **(2);**
- means for retrieving information relating to the display of the user equipment **(2)** used for the online access of the video content;
- means for determining a threshold value of the frequency of views so that a summarization of the video content composed of the chunks that have a frequency view higher than the threshold value agrees with the retrieved information relating to the connection context and to the display of the user equipment **(2);**
- means for delivering the summarization of the video content to the user equipment **(2).**

8. The system of claim 7, wherein the communication network is a social network.

9. The system of claim 8, wherein the group (10) of users is a social network group.

10. Computer program implemented on a processing unit of a computer, said program including code sections for performing instructions corresponding to the steps of a method according to any of claims 1 to 6.
